# FASCICULE DE BREVET EUROPEEN

(11) **EP 0 838 993 B1**
(45) Date de publication et mention de la délivrance du brevet: **02.05.2002**
(21) Numéro de dépôt: 97925098.2
(22) Date de dépôt: 16.05.1997
(51) Int. Cl.: A01C 1/06

(54) **MICROPARTICULES CONTENANT DES BACTERIES ET PROCEDE DE PRODUCTION**
BAKTERIEN ENTHALTENDE MIKROPARTIKEL UND HERSTELLUNGSVERFAHREN
MICROPARTICLES CONTAINING BACTERIA AND PRODUCTION METHOD

(30) Priorité: 20.05.1996 FR 9606215
(43) Date de publication de la demande: 06.05.1998
(73) Titulaire: MAINELAB, 49100 Angers (FR)
(72) Inventeur: AMIET-CHARPENTIER, Caroline, F-49100 Angers (FR); BENOIT, Jean-Pierre, F-49240 Avrille (FR); RICHARD, Joel, F-49160 Longue (FR)
(74) Mandataire: Warcoin, Jacques
(86) Numéro de dépôt international: FR9700874
(87) Numéro de publication internationale: WO9743894

(56) Documents cités:
- EP-A- 0 145 086
- EP-A- 0 253 673
- EP-A- 0 295 968
- EP-A- 0 377 370
- EP-A- 0 494 802
- EP-B- 0 017 565
- WO-A-93/14158
- AU-B- 589 380
- FR-A- 2 615 203
- US-A- 5 113 619

## Description

La présente invention est relative à de nouvelles microparticules à base de polymères, contenant des bactéries, utiles notamment pour l'inoculation de semences et dans les compositions agroalimentaires. Elle a également pour objet un procédé de production de telles microparticules ainsi que les microparticules susceptibles d'être obtenues par ledit procédé.

L'invention est également relative à l'application de ces microparticules pour l'enrobage ou le pelliculage des semences et aux semences enrobées par lesdites microparticules.

Elle concerne enfin les compositions agroalimentaires contenant de telles microparticules.

Dans l'industrie des semences, on recherche depuis de nombreuses années le moyen d'inoculer des plantes par des bactéries stimulatrices de la croissance des végétaux afin d'améliorer les récoltes et réduire l'emploi de pesticides.

On distingue schématiquement deux types d'inoculation :
- la bactérisation indirecte qui implique l'utilisation de "billes bactériennes" mises en contact, simultanément avec les semences, lors du semis,
- la bactérisation directe qui consiste à inoculer directement les semences sous forme d'un enrobage ou revêtement incluant lesdites bactéries.

A l'heure actuelle, la bactérisation indirecte a été essentiellement étudiée. De nombreux travaux ont en effet permis de former des granules de bactéries à base de polymères tels que les polyacrylamides (Dommergues et al, Appl. Environ. Microbiol., 37 (4), 779-781, 1979) ou les polysaccharides comme l'alginate (Van Elsas et al Biol. Fertil:Soils, 14, 14-22, 1992 ou Diem et al. AISI, Santa Margherita Ligure, Italy, 25-29 Sept., 196-210, 1988) ou les K-carraghenanes (Trevors et al, Microbial releases, 1, 61-69, 1992) ou les I-carraghenanes (Bashan, Appl. Environ. Microbiol., 51(5), 1089-1098, 1986) ou le xanthane (Jung et al, Plant and Soil, 65, 219-231, 1982 ou Mugnier et al, Appl. Environ. Microbiol., 50(1), 108-114, 1985).

En outre, plusieurs demandes de brevet relatives aux travaux précités décrivent l'obtention et l'utilisation de telles bactéries enrobées.

La demande de brevet FR-A-2615203 décrit une méthode d'encapsulation par coextrusion permettant d'obtenir des granules sphériques d'un diamètre de 6 mm environ contenant environ 10⁸ bactéries chacune.

La demande de brevet européen n° EP-A-295 968 décrit des engrais contenant des microorganismes isolés de la rhizosphère, et obtenus par microencapsulation dans une matrice de polysaccharide.

La demande de brevet européen n° EP-A-17 565 décrit l'inclusion de rhizobiums dans un polymère polysaccharidique, destinés à l'inoculation des légumineuses, en vue d'augmenter leur potentiel fixateur d'azote.

Cependant cette méthode de bactérisation indirecte ne convient pas à l'industrie des semences qui préfère commercialiser un produit prêt à l'emploi évitant ainsi l'étape de bactérisation in situ lors du semis.

Dans cette optique, Bashan Y. (Appl. Environ. Microbiol., 51(5) 1089-1098 (1986)) a décrit la bactérisation directe de semences de blé par des bactéries bénéfiques de la rhizosphère. Ces dernières étaient incluses dans l'enrobage d'alginate de calcium de semences. Cette technique d'encapsulation des semences avec un alginate renfermant des bactéries s'est révélée non applicable, selon Bashan, en raison d'une incompatibilité de conservation entre bactéries et semences : ces dernières nécessitent un environnement sec sinon elles germent précocement, alors que les microorganismes exigent un taux d'humidité plus important pour survivre.

On a également proposé (Digat, Edit. C. Keel; B. Koller, G. Defagot. I.O.B.C. / W.P.R.S. bulletin, XIV-8, 383-391, 1991) la bactérisation directe par des bactéries rhizosphériques, de différentes sortes de semences (pois, soja, maïs, laitue, betterave, tomate) par une technique de double inclusion dans des granulés d'alginate de calcium (environ 10⁸ bactéries par semence). La viabilité bactérienne est estimée après une déshydratation des semences enrobées après une heure à 40° C. Celle-ci est de plus de 10⁷ bactéries par semence pour les différents types de semences testées.

Enfin Callan et al (Hort. Science, 26 (9), 1163-1165, 1991) ont montré in vivo qu'il était possible avec des semences de maïs pelliculées avec une suspension de Pseudomonas fluorescens d'obtenir dans une solution de méthylcellulose à 1,5 % une protection égale ou supérieure au fongicide, contre l'attaque par Pythium ultimum, que la pression de la maladie causée par le champignon soit sévère, modérée ou faible.
Par ailleurs, on cite les documents suivants :

EP-A- 494 802 décrit des graines revêtues de particules d'un polysaccharide au moins partiellement polymérisé contenant des cellules déshydratées d'un microorganisme ayant un effet bénéfique sur la croissance de la plante cultivée. Ces particules sont obtenues par broyage d'un gel séché d'un polysaccharide au moins partiellement polymérisé contenant des cellules d'un microorganisme désiré (cf. page 3, lignes 39 et 40). Les particules ne contiennent pas une quantité d'eau appropriée pour permettre la survie desdites bactéries.

On se réfèrera de plus à la publication Bashan Y. discutée ci-dessus qui explique que cette technique d'encapsulation à sec des semences présente de nombreux inconvénients étant donné que les microorganismes exigent, au contraire de ce document, un taux d'humidité suffisant pour survivre.

Bashan signale notamment que lorsque l'on procède à une bactérisation directe par une solution d'alginates contenant des bactéries et que l'on sèche à 50°c l'enrobage, on a une perte immédiate en bactéries vivantes, le nombre de bactéries passant de 10⁸ à 10² bactéries par semence.

EP-A- 377 370 concerne un procédé d'encapsulation de particules de principe actif par pulvérisation d'un copolymère silicone thermoplastique en solution dans un solvant organique ou en dispersion ou en émulsion aqueuse et élimination par séchage à l'air chaud du solvant ou de l'eau. Ce document décrit en fait un film polymérique enrobant une particule qui ne peut être une bactérie et qui est en tout état de cause déshydratée.

FR-A- 2 615 603 décrit des granulés biodégradables comprenant un noyau consistant en une matrice nourricière enrobant les microorganismes à inoculer, et une enveloppe protectrice poreuse enrobant ledit noyau.

Ces granulés sont de dimension macroscopique de diamètre compris entre 3 mm et 12 mm (cf. page 5, lignes 25-30) soit 100 fois supérieure aux microparticules selon l'invention. Leur taille supérieure ou mm ne permet pas une bactérisation directe des semences.

On remarquera en outre que les granulés décrits dans ce document ne sont pas destinés à l'enrobage de semences. Le passage page 7, lignes 28-31 du document ne se réfère pas à l'enrobage de semences avec les granulés mais simplement au fait que l'extrait nutritif dans lequel les microorganismes sont enrobés peut également servir d'enrobage à des semences.

EP-A- 17 565 décrit un procédé d'inclusion de microorganismes dans une matrice constituée par un gel de polymère, le gel étant associé à une substance à grande capacité d'absorption d'eau de manière à obtenir un mélange gel + absorbant ayant une teneur en eau supérieure à 50 %.

On notera que les granulés obtenus présentent un diamètre de l'ordre de 3 mm (cf. page 7, lignes 46 à 57). Par ailleurs, ce document se réfère à la bactérisation indirecte telle qu'elle est définie ci-dessus.

EP-A- 295 968 se réfère à des engrais contenant des microorganismes conditionnés par microencapsulation dans une matrice de polysaccharide. Le microorganisme encapsulé se présente généralement sous forme d'une poudre beige claire pouvant être mélangée à tout engrais contenant de l'azote et/ou du phosphore et/ou du potassium (cf. colonne 2, lignes 22-27). Il s'agit donc à nouveau d'une encapsulation de bactéries sous forme déshydratée.

EP-A- 253 673 décrit des semences revêtues d'un film comprenant des microorganismes et un copolymère du type vinyl pyrrolidone et vinyl acétate ou styrène ou styrène substitué.

Il ne s'agit en aucune manière de microparticules mais plutôt d'une composition particulière de polymères enrobant les semences. Ce document se réfère à la technique bien connue d'enrobage ou de pelliculage. On notera que les microorganismes ne sont pas hydratés car si cela était le cas, cela provoquerait la germination prématurée des graines.

EP-A- 145 086 décrit des semences enrobées au moyen d'un polyester qui peut comprendre des bactéries. Il s'agit donc de la même technique d'enrobage que celle décrite dans le document précédent, c'est-à-dire avec des bactéries déshydratées.

US-A- 5 113 619 se réfère également à la technique d'enrobage bien connue de semences par un film contenant des bactéries.

Il apparaît donc que jusqu'à présent il n'a pas été possible de produire des semences, associées à des bactéries, présentant une durée de conservation suffisante pour qu'elles puissent être utilisées plusieurs mois après leur enrichissement en bactéries.

L'objet de la présente invention est en particulier de résoudre ce problème.

Un autre objet de la présente invention est de proposer de nouvelles microparticules contenant des bactéries et permettant de préserver leur viabilité pendant une durée appropriée. Cette propriété peut être valorisée aussi bien dans le domaine de la bactérisation de semences que dans l'alimentation animale vu que les bactéries notamment de type lactique ont un effet probiotique.

La solution au problème indiqué ci-dessus réside en premier lieu dans une nouvelle microparticule selon la revendication 1.

On définit ci-après les termes suivants :
- quantité efficace : quantité de bactéries qui, lorsque la microparticule de polymère est désagrégée, permet de libérer des bactéries en nombre d'unités formant colonie (UFC) suffisant pour assurer le résultat technique recherché, par exemple la croissance des végétaux ou la protection contre certains champignons nuisibles.
- quantité appropriée : teneur en eau suffisante pour assurer la survie des bactéries encapsulées.
- hydrosolubles, hydrodispersés ou hydrodispersables : polymères pouvant être solubilisés ou dispersés par action de l'eau.

Par "microparticule" on entend des particules dont le diamètre est inférieur à 1 mm, de préférence à 500 µm. Les microparticules peuvent se présenter sous la forme de microsphères (bactéries noyées dans la matière) ou de microcapsules (bactéries au centre de la microcapsule).

On a en effet trouvé de façon surprenante qu'il était possible d'obtenir, par un procédé de séchage à sec (en anglais "spray-drying") dont les paramètres ont été judicieusement choisis, des microparticules présentant les caractéristiques appropriées à l'enrobage des semences et pour les compositions agroalimentaires et plus particulièrement contenant des bactéries dont le nombre d'unités formant colonie (UFC) est suffisant, même après plusieurs mois, pour une utilisation dans l'industrie.

Il faut noter que l'invention n'est pas limitée à l'utilisation des microparticules dans le domaine de la croissance des végétaux. Bien au contraire, l'invention trouvera d'autres applications selon les bactéries contenues dans la microparticule, en particulier dans le domaine agroalimentaire.

On décrira en premier lieu les microparticules objet de l'invention puis le procédé pour les obtenir et enfin l'application de celles-ci.

La proportion en matrice de la microparticule est généralement comprise entre 70 et 99,9 %, et préférentiellement entre 85 et 99,5%.

Les microparticules ont généralement un diamètre moyen compris entre 1 et 100 µm. De préférence, entre 2 et 50 µm.

A l'intérieur de cet intervalle selon les applications des microparticules, le diamètre pourra varier de façon significative. Ainsi dans le cas de l'application à l'enrobage des semences il sera avantageusement compris entre 5 et 35 µm.

La largeur de la distribution de taille est généralement comprise entre 1 et 30 µm.

Une des caractéristiques essentielles des microparticules selon l'invention est leur teneur en eau résiduelle.

Cette teneur résiduelle en eau est en effet nécessaire pour assurer la survie des bactéries. Cette teneur sera généralement comprise entre 4 et 30% en poids, et préférentiellement entre 8 et 25 %, cette teneur dépendant, en outre, de la nature des bactéries encapsulées.

La proportion de bactéries est définie par le nombre d'unités formant colonie UFC pour un gramme de particules. En général la proportion est supérieure à 10⁶ et de préférence comprise entre 10⁸ et 10¹¹ UFC/g de particules.

Typiquement après trois mois dans les conditions appropriées, la proportion de bactéries par gramme de microparticules est supérieure à 10⁵ UFC et n'a pas diminué de plus d'un facteur 10³ par rapport à la proportion initiale de bactéries.

Le nombre de bactéries par microparticule peut être déduit du nombre de bactéries par gramme de microparticules lorsque l'on connaît le diamètre desdites particules. Bien évidemment, ce nombre variera en fonction du diamètre.

Par exemple pour une microparticule d'un diamètre 20 µm, le nombre de bactéries est compris entre 1 et 90. Pour un diamètre de 30 µm, il est compris entre 2 et 300 ; pour un diamètre de 40 µm, il est compris entre 4 et 700.

Parmi les polymères hydrosolubles, hydrodispersés ou hydrodispersables on peut citer les polymères vinyliques fonctionnalisés par des groupements ionisables ou polaires, les polymères acryliques ou méthacryliques, les polysaccharides éventuellement modifiés.

Les groupements ionisables ou polaires sont plus particulièrement les substituants des monomères dont dérivent les polymères vinyliques. Parmi ceux-ci on peut citer à titre indicatif les groupements COOH, SO₃H,SO₄H, NH₂, pyridine, pyrrolidone, OH, diméthyléthylamine.

Selon une variante préférée, les polymères acryliques ou méthacryliques sont choisis parmi les homopolymères ou copolymères acryliques ou méthacryliques.

Parmi les polysaccharides, on peut citer à titre non limitatif :
- l'amidon ou l'amidon modifié comme les carboxyméthylamidons, les polysaccharides résultant de la dépolymérisation par une méthode physique, chimique ou enzymatique,
- la cellulose ou la cellulose modifiée comme les carboxyméthylcelluloses, l'éthylcellulose, l'hydroxyméthylcellulose, l'hydroxyéthylcellulose, l'hydroxypropylcellulose, la méthylhydroxyéthylcellulose, la méthylhydroxypropylcellulose, les polysaccharides résultant de la dépolymérisation par une méthode physique, chimique ou enzymatique.
- les alginates, extraits d'algues brunes,
- les carraghénanes de type lambda, iota ou kappa extraits d'algues rouges,
- les pectines extraites des citrons, des pommes ou des betteraves,
- les pectates qui résultent de la déméthylation des pectines,
- les guars, les guars modifiées tels que les carboxyméthylguars,
- les xanthanes,
- les chitosans.

De préférence, les microparticules à base de polysaccharides selon l'invention sont formées d'amidon, de cellulose, d'agar-agar ou d'éthylcellulose.

Les masses molaires des polymères hydrosolubles sont comprises entre 3000 et 10⁵ g/mole et préférentiellement entre 5000 et 70 000 g/mole. Les masses molaires des polymères hydrodispersés ou hydrodispersables sont comprises entre 60 000 et 2.10⁶ g/mole et préférentiellement entre 80 000 et 5.10⁵ g/mole.

Parmi les bactéries assurant la croissance des végétaux on peut citer : les bactéries du genre Pseudomonas fluorescens-putida qui sont des rhizobactéries en forme de bâtonnets gram négatif et aérobies. On peut également citer Azospirillum brasilense et Bradyrhizobium japonicum.

Parmi les bactéries à usage alimentaire on peut citer Lactobacillus acidophilus ou Streptoccocus salivarius ou d'autres bactéries lactiques.

Parmi les bactéries à usage pharmaceutique on peut citer, Bifidobactérium pseudolongum qui a un rôle bénéfique au niveau de la microflore intestinale humaine et animale.

Dans le cas des microparticules à base de polysaccharides, il est avantageux que celles-ci comprennent un agent de protection à forte rétention d'eau permettant d'améliorer la teneur résiduelle en eau desdites microparticules.

Parmi ces agents de rétention encore appelés agents protectants, on peut citer les produits dérivés du lait (lait en poudre, Carbélac WB 700® , Carbélac 35®, Clar 101®) les hydrolysats tels que la caséine, la levure, le milieu de culture MRS base. Ces agents ont en outre pour fonction de constituer la base du milieu favorable à la conservation de la biomasse à l'intérieur de la microparticule.

Ces agents seront présents dans un rapport polymère/agent de rétention de l'eau compris entre 60/40 et 90/10. Ils peuvent bien entendu être également présents dans le cas de microparticules à base de polymères vinyliques ou acryliques.

D'autres agents hygroscopiques présents par rapport aux polymères secs tels que la silice hydrophile (jusqu'à 10 %) sont avantageusement associés aux polymères hydrosolubles, hydrodispersés ou hydrodispersables.

Il est également possible d'y ajouter en faible quantité certains additifs servant de substrat potentiel durant le stockage. Ces additifs favorisent également la survie des bactéries au cours du procédé de séchage qui sera décrit ci-après et permettent de protéger les bactéries de l'oxygène actif. Parmi ces additifs on peut citer : le carbonate de calcium, le β-glycérophosphate, le glutamate de sodium, la vitamine C, le glucose, le lactose.

Les additifs sont généralement présents à raison de 0,5 à 30 % en poids par rapport au polymère, et préférentiellement de 1 à 20 %.

L'invention concerne également un procédé de production de microparticules telles que décrites précédemment, caractérisé en ce qu'une solution ou dispersion aqueuse comprenant un polymère hydrosoluble ou hydrodispersable, une suspension bactérienne, éventuellement un agent de protection, un agent hygroscopique et des additifs est pulvérisée sous courant d'air chaud puis en ce que les microparticules sont récupérées. Ces microcapsules sont récupérées notamment par séparation du courant d'air chaud.

La technique par séchage à air chaud d'une pulvérisation (en anglais "spray drying") est largement répandue dans l'industrie chimique, l'industrie alimentaire et les industries biochimiques et pharmaceutiques (Broadhead et al, Drug Dev. Ind. Pharm., 18 (11 et 12), 1169-1206, 1992). C'est une technique pouvant être appliquée aux composés thermosensibles tels que les bactéries.

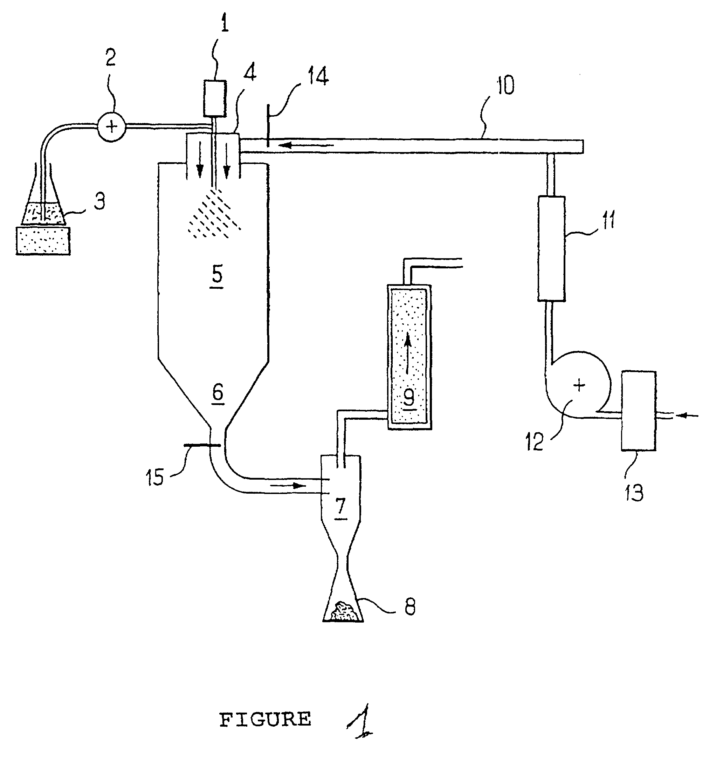

A titre purement illustratif on donne à la figure unique annexée, une représentation schématique d'un tel dispositif avec ci-après les significations des références:
1/ Ensemble de pulvérisation
2/ Pompe péristaltique
3/ Solution à atomiser
4/ Distributeur d'air
5/ Chambre de dessiccation
6/ Cône de la chambre de dessiccation
7/ Cyclone
8/ Flacon de récupération
9/ Filtre de sortie
10/ Corps de chauffe
11/ Débitmètre
12/ Turbine
13/ Filtre absolu
14/ Sondes de température à l'entrée
15/ sondes de température à la sortie.

Selon une variante préférée, le taux de matière sèche (TMS) de la solution ou dispersion aqueuse est compris entre 20 et 30 %, la teneur en solution bactérienne (Tc) est de l'ordre de 3 à 10% et lorsqu'un agent de protection est présent, le rapport en poids polymère/agent de protection est compris entre 60/40 et 90/10.

La température de l'air chaud est de préférence de l'ordre de 60° C à 120° C selon les cas, bien que certaines bactéries comme les bactéries lactiques puissent résister à une température de l'ordre de 140° C.

L'invention concerne également l'application des microparticules décrites précédemment dans le domaine cosmétique, pharmaceutique, agroalimentaire, agricole.

Elle concerne plus particulièrement l'application desdites microparticules à l'enrobage ou au pelliculage de semence.

Ainsi, de façon générale, l'invention concerne un produit de multiplication de plantes cultivées, revêtu en partie ou en totalité d'une couche contenant des microparticules selon l'invention.

On désigne par le nom "produit de multiplication" toutes les parties génératives de la plante qu'on peut utiliser pour la multiplication de celle-ci. On citera par exemple les graines (semences au sens étroit), les racines, les fruits, les tubercules, les bulbes, les rhizomes, les parties de tige, les plants, (pousses) et autres parties de plantes. On mentionnera également les plantes germées et les jeunes plants qui doivent être transplantés après germination ou après la sortie de terre. Ces jeunes plants peuvent être protégés avant la transplantation par un traitement total ou partiel par immersion.

Ainsi, ces composés peuvent être utilisés dans le traitement des semences (par exemple céréales, cotonnier, betterave, colza, graines fourragères, graines légumières) par exemple sous la forme d'enrobage ou de pelliculage.

L'invention est maintenant illustrée par les exemples suivants.

### Conditions générales des expériences

Les polymères d'encapsulation étudiés, sont :
- un copolymère d'esters d'acide acrylique et méthacrylique (Eudragit® RS 30D, obtenu chez Röhm Pharma, GmbH, Darmstadt, Allemagne).
- un amidon modifié (N-Lok®, provenant de National Starch & Chemical).
- une éthylcellulose (Aquacoat®, Seppic, France), nécessitant l'utilisation d'un plastifiant, le phtalate de diéthyle.

La substance hygroscopique utilisée est :
- une silice hydrophile (Sipernat 22®, Degussa France). Trois concentrations sont testées :
   3,1 %, 4,5% et 6,0% en poids par rapport au polymère sec (représentant 30% de la suspension).

Les agents de protection ont pour fonction de participer à la rétention d'eau et de constituer la base du milieu favorable à la conservation de la biomasse à l'intérieur de la microparticule.

Parmi ceux-ci ont été utilisés les produits dérivés du lait :
- Carbélac 35@ (société Carbery Milk Products, Irlande)
- Carbélac WB 700®
- Clar 101® ( société CLAR, France)
- Hydrolysat de caséine
- Hydrolysat de levure.

Les souches de rhizobactéries appartenant au groupe Pseudomonas fluorescens-putida, bâtonnets gram négatif et aérobies, sont :
- la souche M3.1, isolée à partir de racines de maïs thaïlandais,
- ou la souche G92, isolée à partir de racines de pommiers français (Golden Delicious).

Ces deux souches ont été fournies par l'Institut National de la Recherche Agronomique (INRA), station de Pathologie végétale et Phytobactériologie, Beaucouze, France.

Les bactéries sont cultivées à 26° C, pendant quelques jours (5 à 7 jours), dans 100 ml de milieu liquide de King B [20g proteose peptone n° 3 ; 1,5 g di-potassium hydrogénophosphate ; 1,5 g magnésium sulfate ; 12,5 g glycérol bidistillé ; 1 l d'eau déminéralisée).]

Les cellules sont récoltées stérilement par centrifugation à 7000 tpm (5910 g) pendant 10 min à 12°C, pour une concentration finale de 10¹¹-10¹² unités formant colonie (UFC)/ml.

Les différentes solutions de polymères sont préparées en utilisant les quantités suivantes :
- 100 ml de copolymère méthacrylique (Eudragit®, déjà sous forme de dispersion aqueuse, renfermant 30% de polymère sec),
- 30 g de poudre N-Lok® dissous dans 70 g d'eau déminéralisée,
- 100 ml d'éthylcellulose, déjà sous forme de dispersion aqueuse (30% de polymère sec) et 5 ml de phtalate de diéthyle, mélangés et agités pendant 40 min.

Pour la solution à atomiser, 5 à 10 ml de cellules bactériennes, à raison de 10¹¹-10¹² UFC/ml, sont ajoutés aux préparations de polymères (100 ml) 2 à 4 heures avant l'atomisation et l'ensemble est mis sous agitation. La compatibilité polymères/bactéries est vérifiée juste avant de procéder à la microencapsulation.

La suspension à vaporiser est agitée pendant toute la durée de passage dans un système d'atomisation utilisant une buse à ultrasons ou une buse pneumatique, et le produit obtenu est récolté à deux niveaux :
- dans le flacon de récupération,
- dans le cône de la chambre de dessiccation.

Le flux d'alimentation est co-courant à l'entrée d'air de séchage (Figure annexée).

La survie des rhizobactéries est étudiée de la façon suivante :

Les bactéries piégées dans les microparticules sont libérées en dispersant ou en dissolvant les microparticules :
- d'Eudragit® dans l'éthanol à 15% (v/v), pendant 5 min. Cette concentration d'alcool a été préalablement testée sur les bactéries pour vérifier si elle n'était pas toxique,
- d'amidon modifiée, dans l'eau,
- d'éthylcellulose, dans l'acétone, le dichlorométhane ou l'eau physiologique peptonée [chlorure de sodium 0,9% ; peptone 1% ].

La viabilité des bactéries libérées est estimée par la technique de numération suivante :
- Suspension : libération des bactéries dans 4,5 ml d'eau déminéralisée stérile (pour les microparticules d'amidon modifié), dans 4,5 ml d'alcool à 15% (pour celles à base d'Eudragit®) et dans 4,5 ml d'eau physiologique peptonée (pour les microparticules d'éthylcellulose).
- Puis établissement de dilution au dixième dans de l'eau déminéralisée stérile (0,5 ml de suspension bactérienne ; 4,5 ml d'eau déminéralisée stérile).
- Etalement de 50 µl, sur milieu gélosé de King B [Agar 15 g/l (Osi, France)] sur lequel les bactéries émettent une fluorescence verte intense typique de cette souche permettant un dénombrement visuel des colonies développées. Les boîtes de Pétri sont ensuite placées à l'étuve à 26° C. La viabilité bactérienne est estimée par une moyenne, à partir de 3 prélèvements de microparticules et établissement d'1 à 2 gammes de dilution par prélèvement. D'où obtention de la viabilité bactérienne en UFC/g de microparticules dissoutes.

Une méthode similaire est mise en oeuvre pour étudier la viabilité et la survie des bactéries lactiques.

La granulométrie est mesurée grâce à un appareil Coulter®.

La mesure de l'humidité est réalisée à l'aide d'un analyseur d'humidité. L'humidité résiduelle est obtenue à 135°C et s'exprime en pourcentage (%).

### I - Expériences d'encapsulation de bactéries dans un copolymère méthacrylique

Les exemples 1 à 6 sont réalisés avec Pseudomonas fluorescens putida et les exemples 7 à 10 avec une bactérie lactique ayant une application dans le domaine agroalimentaire.

### Exemple 1

A environ 100 ml correspondant à 104,24 g de dispersion de copolymère méthacrylique (Eudragit RS30D®) dans un erlen de 250 ml stérile, on ajoute environ 5 ml correspondant à 5,73 g de culot bactérien. L'ensemble est agité pendant 2 h. La concentration bactérienne dans le polymère est déterminée par SDE de 10⁻⁶ à 10⁻⁹ à partir de trois prélèvements de 0,5 ml effectués avant atomisation.

Les conditions d'atomisation sont :
- température de l'air à l'entrée = 60° C
- débit du flux d'alimentation = 7 ml/min
- débit de l'air chaud = 32 Nm³/h
- ultrasons (buse) : fréquence = 37 kHz, amplitude = 75% de sa puissance maximale (150 W).

Les microparticules sont récupérées dans un erlen de 500 ml stérile ou dans le cône de la chambre de dessiccation et pesées. Elles possèdent un diamètre moyen de 48 µm et comportent en moyenne 7,1.10⁸ UFC/g de microparticules.

Après deux mois, le nombre d'UFC/microparticule est 1,9.10⁷; après 6 mois 1,3.10⁶ ; après un an 3,4.10³ UFC/microparticule.

Taux d'humidité : 24 % en poids.

### Exemple 2

A environ 100 ml correspondant à 102,75 g de dispersion de copolymère méthacrylique (Eudragit RS30D®) dans un erlen de 250 ml stérile, on ajoute environ 5 ml correspondant à 5,94 g de culot bactérien. L'ensemble est agité pendant 3 h. La concentration bactérienne dans le polymère est déterminée par SDE de 10⁻⁵ à 10⁻⁸ à partir de trois prélèvements de 0,5 ml effectués avant atomisation.

Les conditions d'atomisation sont :
- température de l'air à l'entrée = 60°C
- débit du flux d'alimentation = 6,90 ml/min
- débit de l'air chaud = 36 Nm³/h
- ultrasons (buse) : fréquence = 37 kHz, amplitude = 75% de sa puissance maximale (150 W).

Les microparticules sont récupérées dans un erlen de 500 ml stérile dans le cône de la chambre de dessiccation et pesées.

Le diamètre moyen des microparticules est de 47 µm et elles comportent 5,8.10⁷ UFC/g de microparticule.

Après deux mois, le nombre d'UFC/microparticule est de 5,5.10⁷ ; après 6 mois 3,6.10⁵ ; après un an 8,1.10⁵.

Taux d'humidité : 25 % en poids.

### Exemple 3

A environ 100 ml correspondant à 106,56 g de dispersion de copolymère méthacrylique (Eudragit RS30D®) dans un erlen de 250 ml stérile, on ajoute environ 1,50 g de silice hydrophile, soit 4,48% par rapport au polymère sec. On ajoute ensuite environ 10 ml correspondant à 11,58 g de culot bactérien. L'ensemble est agité pendant 2 h. La concentration bactérienne dans le polymère est déterminée par SDE de 10-3 à 10⁻⁶ à partir de trois prélèvements de 0,5 ml effectués avant atomisation.

Les conditions d'atomisation sont:
- température de l'air à l'entrée = 60° C
- débit du flux d'alimentation = 7,23 ml/min
- débit de l'air chaud = 36 Nm3/h
- ultrasons (buse) : fréquence = 37 kHz, amplitude = 75% de sa puissance maximale (150 W).

Le diamètre moyen des microparticules est de 41 µm et elles comportent 2.10⁸ UFC/g de microparticule.

Après deux mois, le nombre d'UFC/microparticule est de 5,3.10⁸ ; après 7 mois 2,1.10⁶; 6,2.10⁶ après un an.

Taux d'humidité : 27 % en poids.

### Exemple 4

A environ 100 ml correspondant à 105,53 g de dispersion de copolymère méthacrylique (Eudragit RS30D®) dans un erlen de 250 ml stérile, on ajoute environ 2,00 g de silice hydrophile (Sipernat 22®), soit 5,94% par rapport au polymère sec. On ajoute ensuite environ 5 ml correspondant à 5,87 g de culot bactérien. L'ensemble est agité pendant 2 h 45. La concentration bactérienne dans le polymère est déterminée par SDE de 10⁻⁴ à 10⁻⁷ à partir de trois prélèvements de 0,5 ml effectués avant atomisation.

Les conditions d'atomisation sont :
- température de l'air à l'entrée = 60° C
- débit du flux d'alimentation = 9,41 ml/min
- débit de l'air chaud = 37 Nm3/h
- ultrasons (buse) : fréquence = 37 kHz, amplitude = 75% de sa puissance maximale (150 W).

Les microparticules sont récupérées dans un erlen de 500 ml stérile dans le cône de la chambre de dessiccation et pesées.

Le diamètre moyen des microparticules est de 34 µm et elles comportent 3.10⁸ UFC/g de microparticule.

Après deux mois, le nombre d'UFC/microparticule est de 9.10⁶ ; après 7 mois 8,9.10⁴.

Taux d'humidité : 18 % en poids.

### Exemple 5

A environ 100 ml correspondant à 106,39 g de dispersion de copolymère méthacrylique (Eudragit RS30D®) dans un erlen de 250 ml stérile, on ajoute 1,04 g de silice hydrophile (Sipernat 22®), soit 3,15% par rapport au polymère sec. On ajoute ensuite environ 5 ml correspondant à 5,72 g de culot bactérien. L'ensemble est agité pendant 2 h 40. La concentration bactérienne dans le polymère est déterminée par SDE de 10-5 à 10-8 à partir de trois prélèvements de 0,5 ml effectués avant atomisation.

Les conditions d'atomisation sont :
- température de l'air à l'entrée = 60° C
- débit du flux d'alimentation = 8,62 ml/min
- débit de l'air chaud = 38 Nm3/h
- ultrasons (buse) : fréquence = 37 kHz, amplitude = 75% de sa puissance maximale (150 W).

Les microparticules sont récupérées dans un erlen de 500 ml stérile dans le cône de la chambre de dessiccation et pesées.

Taux d'humidité: 25 % en poids.

Le diamètre moyen des microparticules est de 39 µm et elles comportent 9,8.10⁸ UFC/g de microparticule.

Après deux mois, le nombre d'UFC/g de microparticule est de 5,5.10⁷ ; après 6 mois 7,3.10⁶.

### Exemple 6

A environ 100 ml correspondant à 105,56 g de dispersion de copolymère méthacrylique (Eudragit RS30D®) dans un erlen de 250 ml stérile, on ajoute 1,50 g de silice hydrophile (Sipernat 22®), soit 4,52% par rapport au polymère sec. On ajoute ensuite environ 5 ml correspondant à 5,70 g de culot bactérien. L'ensemble est agité pendant 3 h 35. La concentration bactérienne dans le polymère est déterminée par SDE de 10⁻⁵ à 10⁻⁸ à partir de trois prélèvements de 0,5 ml effectués avant atomisation.

Les conditions d'atomisation sont :
- température de l'air à l'entrée = 60° C
- débit du flux d'alimentation = 8,62 ml/min
- débit de l'air chaud = 36-37 Nm3/h
- ultrasons (buse) : fréquence = 37 kHz, amplitude = 75% de sa puissance maximale (150 W).

Les microparticules sont récupérées dans un erlen de 500 ml stérile dans le cône de la chambre de dessiccation et pesées.

Le diamètre moyen des microparticules est de 42 µm et elles comportent 3,1.10⁸ UFC/g de microparticule après deux mois, et 5,5.10³ après 7 mois.

Taux d'humidité : 21 % en poids.

### Exemple 7

Un exemple similaire à l'exemple 1 a été réalisé avec 75 g de copolymère méthacrylique (Eudragit RS30D®) et 25 g d'un agent de protection qui est :
- le Carbélac 35® (ex 7-a)
- le Carbélac WB 700® (ex 7-b)
- le Carbélac 70® (ex 7-c)
- le Clar 101® (ex 7-d)

La température d'entrée d'air de séchage est de 80° C.

Les microparticules récupérées dans le flacon ont un diamètre moyen de 8 µm.

Les viabilités sont indiquées dans le tableau ci-dessous en UFC/g de microparticules.

| | T0 | T30 | T90 |
|---|---|---|---|
| 7-a | 5,5.10⁹ | 9.10⁸ | 1,7.10⁸ |
| 7-b | 5,2.10⁹ | 5,4.10⁸ | 8,5.10⁶ |
| 7-C | 2,9.10⁹ | 2,9.10⁶ | 2,8.10⁸ |
| 7-d | 2.10⁸ | 1,4.10⁶ | --- |

Taux d'humidité compris entre 9 et 12 % pour chacune des poudres.

### Exemple 8

Un exemple similaire à l'exemple 7 a été réalisé mais avec une température d'entrée d'air de séchage de 120° C. L'agent de protection est :
- l'hydrolysat de levure (ex-9-a)
- l'hydrolysat de caséine (ex-9-b)
- le Carbélac 35® et le glutamate de sodium (ex-9-c)

Les microparticules récupérées dans le flacon ont un diamètre moyen de 7 µm.

Les viabilités sont indiquées dans le tableau ci-dessous en UFC/g de microparticules.

| | T60 | T90 | T120 | T150 |
|---|---|---|---|---|
| 9-a | 1,1.10¹⁰ | 1,1.10⁹ | 1,3.10⁸ | |
| 9-b | 3,4.10⁹ | 4,2.10⁷ | >1,1.10⁹ | 1,1.10⁸ |
| 9-c | 1,9.10⁷ | 5,4.10⁷ | 5,7.10⁷ | 2,2.10⁷ |

Taux d'humidité compris entre 10 et 12 % en poids.

### II - Expériences d'encapsulation de bactéries dans un polysaccharide

### Exemple 9

Un exemple similaire à l'exemple 7 a été réalisé avec 75 g d'amidon modifié (N-Lok®) et 25 g d'un agent de protection qui est :
- le Clar 101® (ex 8-a)
- le Carbélac 35® (ex 8-b)
- le Carbélac 700® (ex 8-c)

Les microparticules récupérées dans le flacon ont un diamètre moyen de 15 µm.

Les viabilités sont indiquées dans le tableau ci-dessous en UFC/g de microparticules.

| | T0 | T30 | T90 |
|---|---|---|---|
| 8-a | 2,4.10⁹ | 2,9.10⁸ | 1,3.10⁷ |
| 8-b | 2.10⁹ | 5,3.10⁸ | 1,1.10⁸ |
| 8-c | 2,2.10⁹ | 1,2.10⁹ | 5.10⁸ |

Taux d'humidité compris entre 10 et 12 % en poids.

### Exemple 10

Un essai réalisé selon l'exemple 8 avec le Carbélac 35® mais à une température d'entrée de 120°C donne les résultats suivants de viabilité :

| | T30 | T60 | T90 |
|---|---|---|---|
| 9-a | 1,2.10⁹ | 4,8.10⁸ | 1.10⁸ |

De même avec l'hydrolysat de levure (9-b) ou l'hydrolysat de caséine (9-c) on obtient les résultats suivants :

| | T0 | T30 | T90 | T120 |
|---|---|---|---|---|
| 9-b | 7,6.10⁹ | 7.10⁹ | 1,1.10⁹ | |
| 9-c | 9,6.10⁹ | 2,1.10⁹ | | >1,1.10⁹ |

Taille des particules 12 µm.

Taux d'humidité compris entre 10 et 12 % en poids.

## Revendications

1. Microparticule, utile notamment pour le traitement des semences et dans les compositions agroalimentaires, **caractérisée en ce qu'**elle est formée d'une matrice de polymères hydrosolubles hydrodispersés ou hydrodispersables comprenant éventuellement un agent de rétention de l'eau, d'une quantité efficace de bactéries et d'une quantité d'eau résiduelle comprise entre 4 et 30 %, ladite microparticule présentant un diamètre compris entre 1 et 100 µm, avantageusement 2 à 50 µm.

2. Microparticule selon la revendication 1, **caractérisée en ce que** les polymères hydrosolubles hydrodispersés et/ou hydrodispersables sont choisis parmi les polymères vinyliques fonctionnalisés par des groupements ionisables, les polymères acryliques ou méthacryliques, les polysaccharides éventuellement modifiés.

3. Microparticule selon la revendication 1 ou 2, **caractérisée en ce que** les polymères vinyliques sont fonctionnalisés par des groupements choisis dans le groupe constitué par les groupements COOH, SO₃H, SO₄H, NH₂, pyridine, pyrrolidone, OH, diméthyléthylamine, les polymères acryliques ou méthacryliques sont choisis dans le groupe constitué par les homopolymères ou copolymères acryliques ou méthacryliques, les polysaccharides sont choisis parmi l'amidon éventuellement modifié, la cellulose éventuellement modifiée, les carraghénanes ou les agars éventuellement modifiés, les xanthanes, les alginates, les chitosans.

4. Microparticule selon la revendication 1 ou 2, **caractérisée en ce que** les polymères hydrosolubles hydrodispersés et/ou hydrodispersables sont choisis dans le groupe constitué par l'amidon, l'amidon modifié, la cellulose, l'agar-agar, l'éthylcellulose.

5. Microparticule selon la revendication 1, **caractérisée en ce que** les bactéries sont choisies dans le groupe constitué par les bactéries du type stimulant la croissance des végétaux, notamment les bactéries choisies dans le groupe constitué par les bactéries du genre Pseudomonas fluorescens ou les bactéries lactiques.

6. Microparticule selon la revendication 1, **caractérisée en ce que** l'agent de rétention de l'eau est choisi dans le groupe constitué par les produits dérivés du lait, les hydrolysats de caséine ou de levure.

7. Microparticule selon l'une des revendications précédentes, **caractérisée en ce que** le nombre d'unités formant colonie (UFC) par gramme de microparticule est compris entre 10⁸ et 10¹¹ UFC/g de microparticule.

8. Procédé de production de microparticules selon l'une des revendications 1 à 7, **caractérisé en ce qu'**une solution ou dispersion aqueuse comprenant un polymère hydrosoluble ou hydrodispersable, une suspension bactérienne, éventuellement un agent de protection, un agent hygroscopique et des additifs est pulvérisée sous courant d'air chaud puis **en ce que** les microparticules sont récupérées.

9. Procédé de production de microparticules selon la revendication 8, **caractérisé en ce que** le taux de matière sèche (TMS) est compris entre 20 et 30 %, la teneur en solution bactérienne (Tc) est de l'ordre de 3 à 10 % et lorsqu'un agent de protection est présent, le rapport en poids polymère/agent de protection est compris entre 60/40 et 90/10.

## Claims

1. Microparticle, useful in particular for treating seeds and in agrofood compositions, **characterized in that** it is made of a matrix of water-soluble, water-dispersed and/or water-dispersible polymers optionally comprising a water-retention agent, of an effective amount of bacteria and of an amount of residual water of between 4 and 30%, said microparticle having a diameter of between 1 and 100 µm, advantageously 2 to 50 µm.

2. Microparticle according to Claim 1, **characterized in that** the water-soluble, water-dispersed and/or water-dispersible polymers are chosen from vinyl polymers functionalized with ionizable groups, acrylic or methacrylic polymers, and optionally modified polysaccharides.

3. Microparticle according to Claim 1 or 2, **characterized in that** the vinyl polymers are functionalized with groups chosen from the group consisting of COOH, SO₃H, SO₄H, NH₂, pyridine, pyrrolidone, OH and dimethylethylamine groups, the acrylic or methacrylic polymers are chosen from the group consisting of acrylic or methacrylic homopolymers or copolymers, and the polysaccharides are chosen from optionally modified starch, optionally modified cellulose, optionally modified agars or carrageenans, xanthans, alginates and chitosans.

4. Microparticle according to Claim 1 or 2, **characterized in that** the water-soluble, water-dispersed and/or water-dispersible polymers are chosen from the group consisting of starch, modified starch, cellulose, agar-agar and ethylcellulose.

5. Microparticle according to Claim 1, **characterized in that** the bacteria are chosen from the group consisting of the bacteria of the type which stimulate plant growth, in particular the bacteria chosen from the group consisting of the bacteria of the Pseudomonas fluorescens genus or lactic acid bacteria.

6. Microparticle according to Claim 1, **characterized in that** the water-retention agent is chosen from the group consisting of milk-derived products, and casein or yeast hydrolysates.

7. Microparticle according to one of the preceding claims, **characterized in that** the number of colony forming units (CFU) per gram of microparticle is between 10⁸ and 10¹¹ CFU/g of microparticle.

8. Process for producing microparticles according to one of Claims 1 to 7, **characterized in that** an aqueous solution or dispersion comprising a water-soluble or water-dispersible polymer, a bacterial suspension, optionally a protective agent, a hygroscopic agent and additives is sprayed under a current of hot air, and then **in that** the microparticles are recovered.

9. Process for producing microparticles according to Claim 8, **characterized in that** the solids content (SC) is between 20 and 30%, the bacterial solution content (Cc) is of the order of 3 to 10% and, when a protective agent is present, the polymer/protective agent ratio by weight is between 60/40 and 90/10.

## Patentansprüche

1. Mikropartikel, das insbesondere für die Behandlung von Samen und in Nahrungsmittel-Zusammensetzungen nützlich ist, **dadurch gekennzeichnet, dass** es aus einer Matrix von wasserlöslichen, in Wasser dispergierten oder in Wasser dispergierbaren Polymeren, welche gegebenenfalls ein Wasser-Retentionsmittel umfasst, einer wirksamen Menge von Bakterien und einer Menge an Restwasser von 4 - 30 % gebildet ist, wobei das Mikropartikel einen Durchmesser von 1 - 100 µm, vorteilhaft 2 - 50 µm aufweist.

2. Mikropartikel nach Anspruch 1, **dadurch gekennzeichnet, dass** die wasserlöslichen, in Wasser dispergierten und/oder in Wasser dispergierbaren Polymere ausgewählt sind aus vinylischen Polymeren, die durch ionisierbare Gruppen funktionalisiert sind, acrylischen oder methacrylischen Polymeren, gegebenenfalls modifizierten Polysacchariden.

3. Mikropartikel nach Anspruch 1 oder 2, **dadurch gekennzeichnet, dass** die vinylischen Polymere durch Gruppen funktionalisiert sind, die ausgewählt sind aus der Gruppe, die aus den Gruppen COOH, SO₃H, SO₄H, NH₂, Pyridin, Pyrrolidon, OH, Dimethylethylamin zusammengesetzt ist, die acrylischen oder methacrylischen Polymere ausgewählt sind aus der Gruppe, die aus acrylischen oder methacrylischen Homopolymeren oder Copolymeren zusammengesetzt ist, die Polysaccharide ausgewählt sind aus gegebenenfalls modifizierter Stärke, gegebenenfalls modifizierter Cellulose, Carragenanen oder den gegebenenfalls modifizierten Agaren, Xanthanen, Alginaten, Chitosanen.

4. Mikropartikel nach Anspruch 1 oder 2, **dadurch gekennzeichnet, dass** die wasserlöslichen, in Wasser dispergierten und/oder in Wasser dispergierbaren Polymere ausgewählt sind aus der Gruppe, die aus Stärke, modifizierter Stärke, Cellulose, Agar-Agar, Ethylcellulose zusammengesetzt ist.

5. Mikropartikel nach Anspruch 1, **dadurch gekennzeichnet, dass** die Bakterien ausgewählt sind aus der Gruppe, die aus den Bakterien des Pflanzenwachstums-stimulierenden Typs zusammengesetzt ist, insbesondere den Bakterien, die aus der Gruppe ausgewählt sind, die aus den Bakterien der Gattung Pseudomonas fluorescens oder den MilchsäureBakterien zusammengesetzt ist.

6. Mikropartikel nach Anspruch 1, **dadurch gekennzeichnet, dass** das Wasser-Retentionsmittel ausgewählt ist aus der Gruppe, die aus Produkten, die von Milch abstammen, Hydrolysaten von Casein oder Hefe zusammengesetzt ist.

7. Mikropartikel nach einem der vorangehenden Ansprüchè, **dadurch gekennzeichnet, dass** die Zahl der kolonienbildenden Einheiten (KBE) pro Gramm Mikropartikel zwischen 10⁸ und 10¹¹ KBE/g Mikropartikel einschließlich liegt.

8. Verfahren zur Herstellung von Mikropartikeln nach einem der Ansprüche 1 bis 7, **dadurch gekennzeichnet, dass** eine wässrige Lösung oder Dispersion, die ein wasserlösliches oder in Wasser dispergierbares Polymer umfasst, eine Bakterien-Suspension, gegebenenfalls ein Schutzmittel, ein hygroskopisches Mittel und Additive unter einem warmen Luftstrom zerstäubt werden und die Mikropartikel dann gewonnen werden.

9. Verfahren zur Herstellung von Mikropartikeln nach Anspruch 8, **dadurch gekennzeichnet, dass** der Gehalt an Trockenmaterie (GTM) zwischen 20 und 30 % einschließlich liegt, der Gehalt an Bakterien-Lösung (Tc) in der Größenordnung von 3 bis 10 % liegt und, wenn ein Schutzmittel vorhanden ist, das Gewichtsverhältnis Polymer/Schutzmittel zwischen 60/40 und 90/10 einschließlich liegt.
